Europäisches Patentamt

(19) European Patent Office

Office européen des brevets

(11) Publication number: **0 020 153**
**B1**

(12) **EUROPEAN PATENT SPECIFICATION**

(45) Date of publication of patent specification: **04.04.84**    (51) Int. Cl.³: **F 24 J 3/02**

(21) Application number: **80301794.6**

(22) Date of filing: **30.05.80**

(54) Radiation collector.

(30) Priority: **01.06.79 GB 7919252**
**10.09.79 GB 7931344**

(43) Date of publication of application:
**10.12.80 Bulletin 80/25**

(45) Publication of the grant of the patent:
**04.04.84 Bulletin 84/14**

(84) Designated Contracting States:
**CH DE FR GB IT LI**

(56) References cited:
**AU - A - 496 259**
**DE - A - 2 502 595**
**US - A - 4 002 499**

**SOLAR ENERGY, vol. 23, May 1979, Oxford, GB**
**M. COLLARES PEREIRA: "High temperature**
**solar collector with optimal concentration: Non-**
**focusing fresnellens with secondary**
**concentration", pages 409-420**
**APPLIED OPTICS, vol. 15, no. 11, November**
**1976, New York, USA A. RABL: "Ideal**
**concentrators for finite sources and restricted**
**exit angles", pages 2880-2883**

(73) Proprietor: **Exxon Research and Engineering**
**Company**
**P.O.Box 390 180 Park Avenue**
**Florham Park New Jersey 07932 (US)**

(72) Inventor: **Moss, Gerald**
**'Trevose' Sarajac Avenue East Challow**
**Wantage Oxfordshire (GB)**

(74) Representative: **Field, Roger Norton et al,**
**ESSO Engineering (Europe) Ltd. Patents &**
**Licences Apex Tower High Street**
**New Malden Surrey KT3 4DJ (GB)**

(56) References cited:
**APPLIED OPTICS, vol. 17, no. 7, April 1978,**
**New York, USA J. KEENE: "Compact infrared**
**heat trap field optics", pages 1107-1109**
**APPLIED OPTICS, vol. 16, no. 10, October 1977,**
**New York, USA M. COLLARES-PEREIRA "Lens-**
**mirror combinations with maximal**
**concentration", pages 2677-2683**

Courier Press, Leamington Spa, England.

## Radiation collector

The present invention relates to a radiation collector and more particularly to a radiation collector which is intended to be statically mounted.

Radiation collectors intended for static mounting are already known, and in US Patent No. 4,002,499, there is described such a collector which comprises a radiation receiving element disposed in a trough or channel-shaped concave reflector. Such a reflector concentrates radiation over a limited range of incident angles relative to the central optical plane thereof, not exceeding a maximum incident angle known as the angle of acceptance, and concentrated radiation is received on or by the radiation receiving element. It can be shown that the maximum concentration ratio, that is the ratio of the intensity of the radiation at the receiving element to the intensity of the incident radiation for such a concentrator is $1/\sin \theta$ where $\theta$ is the angle of acceptance.

It follows from this that if a radiation collector mounted with an East-West orientation is to be useful for six months of every year, equivalent to an angle of acceptance of about 18°, concentration ratios cannot exceed 3.0. Higher concentration ratios can be obtained for shorter annual periods of operation, but this involves either relatively frequent adjustments in the angular disposition of the central optical plane of the collector or alternatively continuous tracking of the radiation source, e.g. the sun, in altitude. Either of these expedients adds to the complication and cost of a collector.

An angle of acceptance of 18° is generally outside the capabilities of a static trough-like reflector. Compound trough-like reflectors can be designed to have an angle of acceptance of 18°, but they are very deep in relation to the cross-sectional dimensions of the receiving element and accordingly employ a relatively large area of reflective surface. Their relatively great depth makes the thickness and weight per unit area of the collector disadvantageously high for mounting on the roof of buildings, both from the point of view of appearance, ease of installation and utility on unstrengthened roof structures. The collector described in U.S. patent No. 4,002,499 has a compound reflector and suffers from the foregoing drawbacks.

Similar drawbacks are experienced by the solar radiation concentrator described in Australian patent specification 496259 which discloses a radiation collector comprising an elongated receiver for receiving radiation, spaced from one side of which is an elongated lens and spaced from the other side of which is an elongated reflector having high specular reflectivity and having two surfaces concave with respect to the receiver, the longitudinal axes of the lens, receiver and reflector being substantially parallel to one another, the longitudinal axis of the receiver being on the plane of optical symmetry of the lens and the receiver being positioned so that it is nearer the lens than the focal plane of the lens. These drawbacks are overcome by a collector according to this invention which comprises the above recited features of the Australian patent specification and wherein additionally the distance between the centre of the receiver and the lens is such that the product of the refractive index of the material or medium which occupies the space between the lens and the reflector and which surrounds the receiver and the sine of the angle between the plane of optical symmetry of the lens and a tangent to the receiver intersecting said plane at the lens is substantially equal to the sine of the angle of acceptance of the system constituted by the lens and the reflector.

The collector of the present invention is relatively shallow and the amount of constructional material is considerably reduced compared to previously described collectors. This is advantageous from the point of view of the cost of the collector per se, the cost of installation and its appearance when installed.

The lens may serve as a dust-excluding cover plate and if the lens is flat on its exposed surface, cleaning may be effected with relative ease.

The lens should be of the type which produces line foci and preferably is of the Fresnel type so that its weight and thickness are minimum. The Fresnel lens may be formed, for example, of extruded radiation-transparent plastics material. If necessary for rigidity it may be adhered on one face of a relatively rigid optically flat radiation-transparent support plate, such as glass or rigid plastics material. If the lens is adhered to a rigid material, it is preferred that the lens should be between the rigid material and the receiver so that the exposed surface of the collector is a flat surface of the rigid material for facilitating cleaning thereof.

With a concave reflector the receiver may be between the bottom of the reflector and the plane of the tops of the sides thereof. When this arrangement is adopted, energy losses by convection may be reduced or substantially prevented by providing a layer of radiation-transparent material which contacts the tops of the sides of the channel of the reflector. However, in this arrangement and in other arrangements in which the receiver is not wholly or entirely between the bottom of the reflector and the plane of the sides thereof, energy losses by convection may be at least partially reduced by providing a layer of radiation-transparent material between the lens and the receiver.

The receiver may be a conduit through which fluid can flow and the fluid e.g., liquid, may be the sole means of extracting energy from the collector. Preferably the receiver is substantially circular in cross-section but it could if desired be for example elliptical in cross-section. If desired its outer surface can be treated to increase its absorptivity and reduce its emissivity, e.g. coated with black chrome.

In order to avoid concentrating radiation along a very narrow band or line on the receiver so as to avoid or reduce damage to the external surface thereof due to excessive localised energy concentrations, the focal plane of the lens is preferably arranged to be more distant from the receiver than the bottom of the reflector for all directions and angles of incidence of radiation on the lens. It will have to be borne in mind in this respect that the focal length of a lens varies with the angle of incidence, and for a collector mounted in an East-West direction, the angle of incidence of solar radiation will vary by some 15° per hour over the course of a day, and in the course of a half-year, the altitude of the sun changes by some $23\frac{1}{2}°$, although it will usually be economical to exploit radiation during only part of the year in most parts of the world outside the tropics. Preferably, the construction and/or arrangement of the lens, reflector and receiver are such that the distance traversed by radiation from the lens to the receiver is less than the contemporary focal length of the lens.

Of course when the material of the radiation receiver is such that the very highly concentrated radiation of a narrow band or line is acceptable and/or desirable, the foregoing considerations assume less importance or may be ignored altogether.

Located on the other side of the receiver from the lens is a reflector. This has high specular reflectivity by which term we mean that the degree of dispersion of the reflected light is low and that little radiation is absorbed by the reflector. The reflector also has at least one surface which is concave as viewed from the receiver.

The reflector is shaped and situated with respect to lens and receiver so that substantially all the rays impinging on the lens at or less than the angle of acceptance either directly impinge on the receiver or are reflected from the reflector onto the receiver.

This means that the shape of the surface of the reflector is preferably at least partly defined by the locus of intersections of tangents drawn from the receiver with rays from the lens at a selected focal length thereof at the angle of acceptance of the collector, a line bisecting the angle defined between a tangent and a ray at each intersection being normal to the surface of the reflector.

In effect the reflector may be shaped as a pair of involutes joined together by a cusp which is substantially on the plane of optical symmetry of the lens, each end of the involute remote from the cusp merging smoothly with a surface which is very slightly concave towards the receiver.

The arrangement of the lens and receiver are such that the focal plane of the lens is further from the lens than the receiver. This is to avoid concentrating radiation along a very narrow band or line on the receiver so as to prevent damage due to excessive heating.

The aforesaid selected focal length of the lens may be the maximum focal length (i.e., the focal length for radiation normal to the plane of the lens).

In a preferred embodiment, the space between the lens and the reflector is occupied by a material of high transparency having a refractive index of at least 1.35 and being capable of withstanding a temperature of at least 75°C.

In this manner it is possible to reduce greatly the dimensions of the collector elements. The use of transparent material also means that it is possible to apply conventional silvering techniques to the underside of the reflector.

In this embodiment it is preferred that the reflector is a silvered surface applied to the material of high transparency with refractive index of at least 1.35. Less desirably the reflector is separate from said material of high transparency and it could be made of glass and highly silvered on one side so as to reflect substantially all the light. Alternatively it can be made of a plastics material such as perspex, also with one surface silvered.

Also in this embodiment the shape of the surface of the reflector is preferably at least partly defined by the locus of intersections of tangents drawn from the receiver with rays from the lens at a selected focal length thereof at the modified angle of acceptance of the collector, a line bisecting the angle defined between a tangent and a ray at each intersection being normal to the surface of the reflector. By modified angle of acceptance we mean the angle of refraction where the angle of incidence is the angle of acceptance.

Where substantially all the space between the lens and the reflector and which surrounds the receiver is occupied by a material of high transparency, this material has to have a refractive index of at least 1.35 and be capable of withstanding temperatures of at least 75°C. Since the concentration ratio, that is the ratio of the mean intensity of the radiation at the receiver to the intensity of the incident radiation for the collector is

$$\frac{n}{\sin \theta}$$

where $\theta$ is the angle of acceptance and n is the refractive index, for a given angle of acceptance the concentration ratio can be increased quite considerably i.e. by a factor of n compared with cases where air occupies the space between the lens and the reflector. By reducing the scale of the radiation collector, for example so that the overall depth of lens, receiver and reflector is only about 13 mm, it is possible economically to fill the space between the lens and reflector with the transparent material of refractive index of at least 1.35. Thus, as explained above one can considerably increase the concentration ratio. Alternatively one could keep the concentration ratio at the hitherto common level of about 3:1 and increase the angle of acceptance. As another alternative one can increase both the concentration ratio and the angle of acceptance compared with systems where there is only air in the space between the lens and reflector.

In order to accommodate changes in dimensions of the receiver due to thermal expansion and contraction there should be a slight air gap surrounding the receiver. This will also mean a considerable reduction in temperature experienced by the material occupying the remainder of the space between lens and reflector due to the thermal insulating properties of air. However the air gap should not be too great because the benefit of the high refractive index of the surrounding material will be lost.

Suitable transparent materials having a refractive index of at least 1.35 include acrylic resin, silicone rubber, polycarbonates and methylpentene polymer.

Preferably the refractive index is at least 1.58. Also it is desirable that the material shall be capable of withstanding temperatures of at least 100°C and more preferably at least 150°C.

As stated above it is preferable if the face of the material remote from them lens is silvered so as to form the reflector. This face of the material will of course have to be correctly shaped so that the reflecting surface is as previously described.

If desired a glass or transparent plastics cover plate may be used to reduce convection losses and to protect the lens from dirt and U.V. radiation.

It is preferred that the underside of the reflector be backed by a layer of supporting thermal insulating material, for example foamed plastics insulating material. This layer can if desired be covered by an outer skin, for example an aluminium sheet.

The combination described above comprises a single lens, a single receiver and a single reflector. In preferred embodiments the radiation collector comprises a plurality of these combinations arranged side by side with the longitudinal axes of the lenses, receivers and reflectors being substantially parallel. Usually each combination of lens, receiver and reflector will be contiguous. In one particular embodiment the transparent material of refractive index of at least 1.35 can be formed in one piece to allow a series of receivers to be housed in a series of substantially parallel recesses formed in the material. The underside of this material can also be shaped so as to conform to the configuration of a plurality of parallel reflectors, one for each receiver.

When a layer of radiation-transparent material is provided in each combination to reduce or substantially prevent energy losses by convection, one layer may be used extending over all combinations.

When the radiation collector is mounted for use the plane of symmetry of the or each lens of the collector should extend substantially in an East-West direction. Also the collector should preferably be tilted so as to receive radiation at the smallest angles of incidence during the part of the year when the collector is to be used to supply energy.

The invention is now further described with reference to the accompanying drawings in which:

Fig. 1 is a diagrammatic representation of the combination of a lens, reflector and receiver shown in a cross-sectional plane perpendicular to the plane of symmetry of the lens and on which are illustrated some lines employed in defining the relationship between the parts of the combination; and

Fig. 2 is a cross-sectional elevation of another embodiment of the radiation collector.

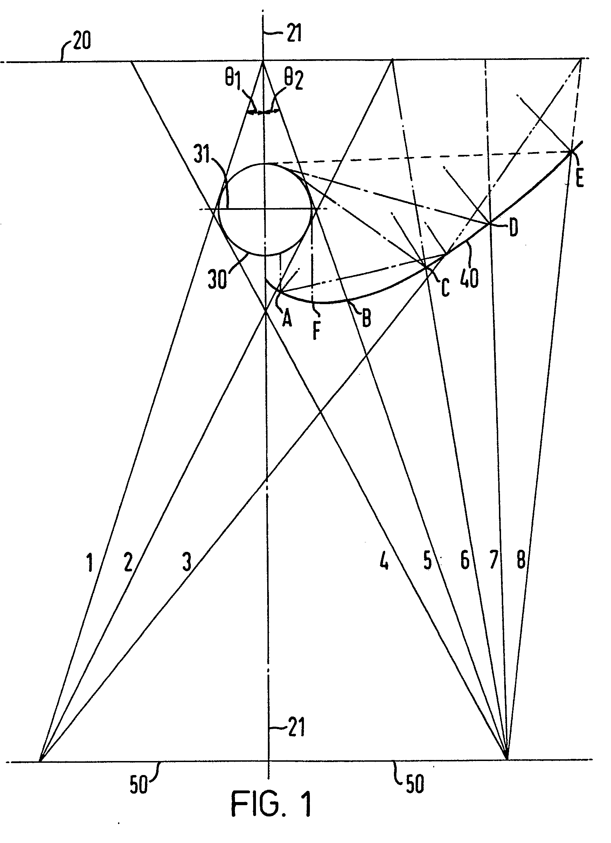

Referring to Fig. 1 the lens 20 is depicted diagrammatically as one having no thickness and its plane of optical and, in this case, also its geometrical, symmetry is indicated by 21. There is a receiver 30 and a reflector 40.

For simplicity, the receiver 30 is shown having a circular exterior, and it will be seen that the plane 21 bisects it. The distance from the lens 20 of the diameter 31 of the receiver 30 parallel to the lens 20 is so chosen that rays 1 and 5 from the central plane 21 at the lens 20 and tangential to the receiver 30 define with the plane 21 respective angles $\theta_1$, $\theta_2$ equal to the designed angle of acceptance.

As shown in Fig. 1, the angles of acceptance defined on both sides of the plane 21 are equal, although with arrangements in which the optical and geometric planes of symmetry of the lens are not coincident, the values of $\theta_1$ and $\theta_2$ could differ.

In order to ensure that rays 1 and 5 are at the maximum values of $\theta_1$ and $\theta_2$ it is necessary for the reflecting surfaces of the reflector 40 on which these rays are incident to be normal to the rays 1 and 5 respectively. This consideration defines the angle of the respective tangent to the reflector 40, as shown for ray 4 and position B. Rays 4, 6, 7 and 8 all intersect ray 5 at the same distance from the lens surface, and the point of intersection will be at the focal length assuming that the radiation incident on the lens 20 is parallel radiation. The rays 1, 2 and 3 intersect at a focal point which is also at the focal distance from the lens 20. The locus of the foci (i.e. the focal surface), indicated by reference 50, may be planar or aplanar.

At point C on ray 6, the angle of the tangent to the reflector 40 is so chosen that the reflected ray is tangential to the receiver 30. Accordingly, at angles of incidence of radiation on the lens greater than that of ray 5, rays impinging on the reflector 40 will not be reflected onto the receiver 30, but will be reflected out of the combination. Points B and C are both on the continuous surface of the reflector 40. In the case of rays 7 and 8, the angle of the surface of reflector is so chosen that respective tangents drawn from the receiver 30 intersect at points D and E so that the rays on reflection at the surface just glance the surface of the receiver 30, and points D and E define further loci on the continuous surface of the reflector 40. It will be seen from the foregoing the manner in which at least the outer regions of the reflector are defined.

In the case of point A, the reflective surface must be approximately normal to ray 2 in order to ensure that rays impinging on the reflector 40 between points A and B en route to the virtual focus on the left-hand (as shown) side of the plane 21 are all reflected onto the receiver 30. At point F, directly beneath a tangent to the receiver 30 which is parallel to plane 21, the reflective surface will be perpendicular to plane 21. Consideration of the form of the reflective surface from point F to plane 21 in the manner already exemplified demonstrates that the reflective surface is the involute of the surface of the receiver 30, starting from a position on the plane 21 and terminating at point B. The involute merges smoothly at point B with the continuous surface extending outwards from point B through points C, D and E, and gives the full contour for the part of the reflector 40 to the right (as shown) of the plane 21. A similar curved surface for the part of the reflector to the left (as shown) of plane 21 is generated in the same manner. In most instances, the reflector 40 will be geometrically symmetrical about the plane 21, although in instances where the lens 20 is not geometrically symmetrical about the central optical plane, and/or in which the receiver 30 is not of a symmetrical external shape or not disposed symmetrically about the central plane 21, the reflector 40 may have a surface which may be correspondingly asymmetrical. However, assuming that the lens 20 and receiver 30 are symmetrically disposed about the coincident optical and geometric central plane 21, the left-hand involute and right-hand involute will define a cusp or a ridge (not shown) which extends towards the receiver 30. The top of the ridge may touch the receiver 30, and although this may be desirable for prevention of energy losses by multiple reflections, it may prove disadvantageous from the point of view of preventing energy losses by the conduction of heat from the receiver 30 to the reflector 40 and parts in heat-conductive relationship therewith. It will therefore usually be preferred that the top of the ridge is separated from the receiver 30 by a distance which gives a good or satisfactory compromise between concentrating the maximum amount of incident radiation on the collector 30 and losing the minimum amount of heat from the collector 30 to the reflector 40 via the ridge thereof. Such a compromise may be determined by experiments within the ability of the skilled technologist. It will be appreciated that separating the top of the ridge from the receiver 30 may necessitate changes in the shape of the reflecting surface of the reflector 40. The separation of the top of the cusp or the ridge from the receiver 30 may conveniently be effected by constructing or forming the reflector 40 so that the cusp or ridge is truncated in some degree to give a flat-topped ridge.

The points F, B, C, D and E determining the shape of the reflecting surface are at arbitrary positions determined only by which tangents to receiver 30 are selected, and the said points have in common the fact that they are on a continuous surface. By selecting different tangents to receiver 30, different smoothly curved reflecting surfaces can be defined.

It is preferred to provide a radiation-transparent foil or layer (not shown) between the bottom of the lens 20 and the top of the receiver 30 (to reduce energy losses by convection). Such a foil may be of a suitable plastics material supported between the lens and the receiver by the sides of the reflector 40 if the sides extend nearer to the lens 20 than the receiver 30 (as they would in the illustrated arrangement).

If the position of the side of the reflector 40 is chosen to be further from the lens than the receiver, such a foil or layer may alternatively be supported by the receiver 30.

When used as a solar radiation collector, radiation incident on the left (as shown) of the plane 21 will to some extent, directly irradiate the receiver 30 although there will be some increasing attenuation due to internal reflections within the lens 20, particularly when the lens is of the Fresnel or multiple prism type, as the angle of incidence increases. The cut-off or isolation will, accordingly, not necessarily be complete at incident angles greater than the designed angles of acceptance, but substantial radiation losses will occur due to re-radiation from the reflector via the lens as the angle of acceptance is attained, and if the equivalent angle of acceptance does not exceed 30°, geometric concentration factors in excess of 2 are possible. As the sun moves from East to West, the angle of the sun in azimuth will change and the effect of the corresponding change in incident angle parallel to the plane 21 in the course of a day may be to shorten the focal length of the lens 20 by as much as 50% for radiation which has an incident angle in a plane parallel to plane 21, of 50°.

Thus another factor to be taken into account in constructing a collector according to the invention is the avoidance of damage to the reflective surface and/or the receiver 30 due to line foci at certain angles of incidence and at particular times of the day. Constructing a collector to take account of this factor will be within the capability of the skilled technologist. In some instances, the design focal surface may be selected to be between the focal surface at dusk or dawn and that at midday, and in some other instances, the design focal surface at midday may be satisfactory.

It will be appreciated from the foregoing that the shape and position of the reflective surface are determined by the aperture (i.e., width) and focal length of the lens, the diameter (or equivalent dimension) of the receiver, the angle of acceptance, and either the distance between the receiver and the ridge of the involute (or equivalent) or the distance between the lens and the reflective surface at the edge of the lens, in a plane parallel to the central plane. Any specified combination of the foregoing variables substantially defines the reflective surface. It should be noted that some extreme rays (i.e. rays passing through an edge of the lens 20), such as ray 3, will undergo two reflections before impinging on the receiver 30. Such double or multiple reflections occur more frequently as the focal length of lens 20 shortens at each end of the diurnal operating period. Multiple reflections are undesirable because energy is lost at each reflection, but as the focal length changes, some multiple reflections are unavoidable in most radiation collectors of the invention.

The described diagrammatically illustrated combination comprises only a single lens, a single reflector and a single receiver. In preferred embodiments, the radiation collector will comprise a plurality of such combinations parallel and adjacent to one another with the edges of adjacent reflectors 40 touching or slightly separated so as to form a cusp or ridge spaced apart from the lens 20, and the lenses may be formed in a single sheet which, if not self-supporting, may be adhered on a suitable radiation-transparent support sheet.

To avoid convection losses as far as possible, a layer of radiation-transparent material (not shown) preferably rests on, or is stretched over, the tips of the sides of adjoining reflectors.

The energy concentrated on the receiver(s) 30 is preferably recovered by the passage of a suitable fluid (e.g. a liquid) through the element(s).

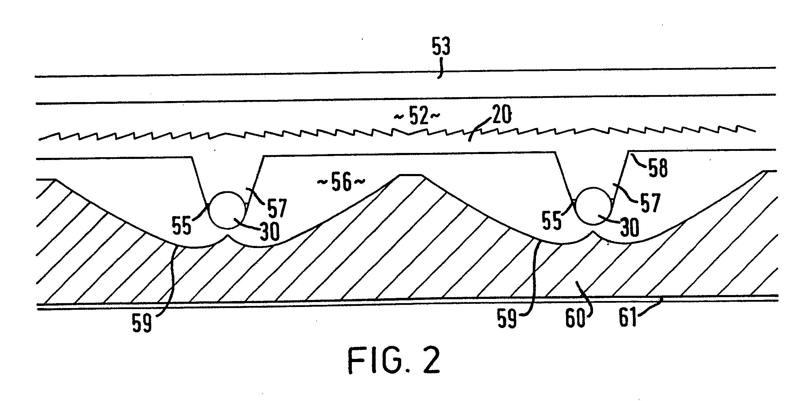

Referring to Fig. 2 the lens 1 is separated by a small air gap 52 from a toughened glass cover plate 53. Two tubular receivers shown at 30 are seated in recesses 55 formed in slabs of transparent methyl pentene polymer 56. Each receiver tube 30 is connected at each end to a header tube (not shown) and this enables there to be a slight air gap between the tube 30 and the surrounding methyl pentene polymer slab.

The top portion of each tube 30 is also covered by a slab 57 of methyl pentene polymer, there also being a slight air gap between slab 57 and receiver tube 30. Each slab 57 forms part of the lens assembly 20, the lens assembly 20 being stuck to slab 56 (shown at 58) by a transparent adhesive.

Slab 56 is cut and shaped so that the underside conforms to the shape of reflectors. These reflectors are formed by silvering the underside of slab 56 at 59.

Beneath slab 56 is a slab or slabs of foamed thermal insulation 60. This insulation which is polyurethane foam is in turn supported by an aluminium plate 61.

With the arrangement shown it is possible to use receivers of 3.75 mm diameter, with an aperture of 37.5 mm, the refractive index of methyl pentene polymer being 1.465. The concentration ratio is approximately 3:1 and the actual depth of the lens, receiver and reflector is about 13 mm. With a 2.5 mm thick cover plate, an air gap of about 3 mm and thermal insulation about 5.5 mm deep below each reflector, the overall thickness of the collector is about 24 mm.

Not only are such collectors very thin compared with previously known collectors but their weight is substantially less than that for the previously known collectors which is in the region of 15 to 20 kg/m². Another advantage of the collectors of this embodiment of the invention is the possibility of automatic manufacture with a consequent reduction in costs.

**Claims**

1. A radiation collector comprising an elongated receiver, spaced from one side of which is an elongated lens and spaced from the other side of which is an elongated reflector having high specular reflectivity and having two surfaces concave with respect to the receiver, the longitudinal axes of the lens, receiver and reflector being substantially parallel to one another, the longitudinal axis of the receiver being on the plane of optical symmetry of the lens and the receiver being positioned so that it is nearer the lens than the focal plane of the lens, characterised in that the distance between the centre of the receiver and the lens is such that the product of the refractive index of the material or medium which occupies the space between the lens and the reflector and which surrounds the receiver and the sine of the angle between the plane of optical symmetry of the lens and a tangent to the receiver intersecting said plane at the lens is substantially equal to the sine of the angle of acceptance of the system constituted by the lens and the reflector.

2. A collector according to claim 1 in which the lens is of the Fresnel type.

3. A collector according to either of claims 1 and 2 wherein the receiver is a conduit for the flow of a fluid therethrough.

4. A collector according to any one of the preceding claims wherein the reflector is nearer to the receiver than the focal plane of the lens.

5. A collector according to any one of the preceding claims wherein the shape of the surface of the reflector is at least partly defined by the locus of intersections of tangents drawn from the receiver with rays from the lens at a selected focal length thereof at the angle of acceptance of the collector, a line bisecting the angle defined between a tangent and a ray at each intersection being normal to the surface of the reflector.

6. A collector according to claim 5 wherein the part of the surface of the reflector bounded by the plane of symmetry of the lens and a plane parallel thereto on one side of the said plane of symmetry and tangential to one side of the receiving element has substantially the shape of an involute of either the receiver or a cylinder envelopped by the receiver on said one side of said plane.

7. A collector according to any one of claims 1 to 4 wherein the space between the lens and the reflector is occupied by a material of high transparency having a refractive index of at least 1.35 and being capable of withstanding temperature of at least 75°C.

8. A collector according to claim 7 wherein said material of high transparency has a refractive index of at least 1.58.

9. A collector according to either of claims 7 and 8 wherein said material of high transparency is capable of withstanding temperatures of at least 100°C, preferably at least 150°C.

10. A collector according to any one of claims 7 to 9 wherein the reflector comprises the silvered surface formed by silvering the face of said material of high transparency remote from the lens.

11. A collector according to any one of claims 7 to 10 wherein the shape of the surface of the reflector is at least partly defined by the locus of intersections of tangents drawn from the receiver with rays from the lens at a selected focal length thereof at the modified angle of acceptance, a line bisecting the angle defined between a tangent and a ray at each intersection being normal to the surface of the reflector.

12. A plurality of collectors according to any one of the preceding claims arranged side by side with the longitudinal axes of the lenses, receivers and reflectors being substantially parallel.

**Patentansprüche**

1. Strahlungskollektor mit einem länglichen Empfänger, von dessen einer Seite eine längliche Linse und von dessen anderer Seite ein länglicher Reflektor beabstandet ist, der ein hohes spiegelndes Reflexionsvermögen besitzt und zwei in bezug auf den Empfänger konkave Oberflächen hat, wobei die Längsachsen der Linse, des Empfängers und des Reflektors im wesentlichen parallel zueinander sind, die Längsachse des Empfängers in der Ebene der optischen Symmetrie der Linse liegt und der Empfänger so angeordnet ist, daß er der Linse näher als die Brennebene der Linse liegt, dadurch gekennzeichnet, daß der Abstand zwischen dem Mittelpunkt des Empfängers und der Linse so groß ist, daß das Produkt aus dem Brechungsindex des Materials oder Mediums, welches den Raum zwischen der Linse und dem Reflektor einnimmt und welches den Empfänger umgibt, und dem Sinus des Winkels zwischen der Ebene der optischen Symmetrie der Linse und einer diese Linsenebene schneidenden Tangente an den Empfänger im wesentlichen gleich wie der Sinus des Akzeptanzwinkels des von der Linse und dem Reflektor gebildeten Systems ist.

2. Kollektor nach Anspruch 1, dadurch gekennzeichnet, daß die Linse eine Fresnel-Linse ist.

3. Kollektor nach Anspruch 1 oder 2, dadurch gekennzeichnet, daß der Empfänger eine Leitung für die Führung einer Fluidströmung ist.

4. Kollektor nach einem der vorhergehenden Ansprüche, dadurch gekennzeichnet, daß der Reflektor näher an dem Empfänger liegt als die Brennebene der Linse.

5. Kollektor nach einem der Ansprüche 1 bis 4, dadurch gekennzeichnet, daß die Form der Oberfläche des Reflektors zumindest teilweise von den Schnittpunkten der an den Empfänger gelegten Tangenten mit Strahlen von der Linse bestimmt ist, die zu einer ausgewählten Brennweise der Linse und einem Akzeptanzwinkel des Kollektors gehören, wobei eine den Winkel zwischen einer Tangente und einem Strahl halbierende Linie in jedem der Schnittpunkte normal zur Oberfläche des Reflektors steht.

6. Kollektor nach Anspruch 5, dadurch gekennzeichnet, daß der Teil der Oberfläche des Reflektors, welcher durch die Symmetrieebene der Linse und durch eine an einer Seite der Symmetrieebene parallel dazu verlaufenden Ebene, die tangential zu einer Seite des empfangenden Elements verläuft, im wesentlichen die Form einer Evolvente entweder des Empfängers oder eines Zylinders hat, der von dem Empfänger an der einen Seite der Ebene eingehüllt wird.

7. Kollektor nach einem der Ansprüche 1 bis 4, dadurch gekennzeichnet, daß der Raum zwischen der Linse und dem Reflektor von einem Material von hoher Transparenz ausgefüllt ist, welches einen Brechungsindex von mindestens 1,35 hat und eine Temperatur von mindestens 75°C aushalten kann.

8. Kollektor nach Anspruch 7, dadurch gekennzeichnet, daß das Material hoher Transparenz einen Brechungsindex von mindestens 1,58 hat.

9. Kollektor nach Anspruch 7 oder 8, dadurch gekennzeichnet, daß das hochtransparente Material Temperaturen von mindestens 100°C, vorzugsweise mindestens 150°C aushalten kann.

10 Kollektor nach einem der Ansprüche 7 bis 9, dadurch gekennzeichnet, daß der Reflektor eine versilberte Oberfläche aufweist, die durch Versilberung derjenigen Fläche des hochtransparenten Materials gebildet ist, welche von der Linse abgewandt ist.

11. Kollektor nach einem der Ansprüche 7 bis 10, dadurch gekennzeichnet, daß die Form des Reflektors zumindest teilweise von den Schnittpunkten der an den Empfänger gelegten Tangenten mit den bei einer ausgewählten Brennweite und bei einem modifizierten Akzeptanzwinkel von der Linse stammenden Strahlen definiert wird, wobei eine den Winkel zwischen einer Tangente und einem Strahl an jedem Schnittpunkt halbierende Linie normal zur Oberfläche des Reflektors steht.

12. Eine Anzahl von Kollektoren gemäß einem der vorhergehenden Ansprüche, dadurch gekennzeichnet, daß sie Seite an Seite mit den Längsachsen der Linsen, der Empfänger und der Reflektoren im wesentlichen parallel zueinander angeordnet sind.

**Revendications**

1. Collecteur de radiations comportant un récepteur oblong, dont un côté est flanqué à une certain distance par une lentille oblongue et dont l'autre côté est flanqué à une certaine distance par un réflecteur oblong ayant une forte réflectivité et ayant deux surfaces concaves par rapport au récepteur, les axes longitudinaux de la lentille, du récepteur et du réflecteur étant sensiblement parallèles entre eux, l'axe longitudinal du récepteur étant dans le plan de symétrie optique de la lentille et le récepteur étant placé en sorte d'être plus proche de la lentille que le plan focal de la lentille, caractérisé en ce que la distance entre le centre du récepteur et la lentille est telle que le produit de l'indice de réfraction de la matière ou milieu qui occupe l'espace entre lentille et réflecteur et entoure le récepteur par le sinus de l'angle qui existe entre le plan de symétrie optique de la lentille et une tangente au récepteur coupant ledit plan au niveau de la lentille est sensiblement égal au sinus de l'angle de réception du système constitué par la lentille et le réflecteur.

2. Collecteur selon la revendication 1, caractérisé en ce que la lentille est du type Fresnel.

3. Collecteur selon l'une ou l'autre des revendications 1 et 2 caractérisé en ce que le récepteur est un conduit pour l'écoulement d'un fluide qui le traverse.

4. Collecteur selon l'une quelconque des revendications précédentes, caractérisé en ce que le réflecteur est plus proche du récepteur que le plan focal de la lentille.

5. Collecteur suivant l'une quelconque des revendications précédentes, caractérisé en ce que la forme de la surface du réflecteur est définie en partie au moins par le lieu géométrique des intersections de tangentes au récepteur avec des rayons allant de la lentille à un point situé à la distance focale choisie de celle-ci et sous l'angle de réception du collecteur, la bissectrice de l'angle formé par une tangente et un rayon à chaque intersection étant normale à la surface du réflecteur.

6. Collecteur selon la revendication 5, caractérisé en ce que la partie de la surface du réflecteur délimitée par le plan de symétrie de la lentille et un plan parallèle à celle-ci situé d'un côté dudit plan de symétrie et tangentiel à un côté de l'élément récepteur a sensiblement la forme d'une développante soit du récepteur soit d'un cylindre enveloppé par le récepteur sur ledit côté dudit plan.

7. Collecteur selon l'une quelconque des revendications 1 à 4, caractérisé en ce que l'espace entre lentille et réflecteur est occupé par une matière à haute transparence ayant un indice de réfraction d'au moins 1,35 et capable de supporter une température d'au moins 75°C.

8. Collecteur selon la revendication 7, caractérisé en ce que ladite matière à haute transparence a un indice de réfraction d'au moins 1,58.

9. Collecteur selon l'une ou l'autre des revendications 7 et 8, caractérisé en ce que ladite matière à haute transparence est capable de supporter des températures d'au moins 100°C, de préférence d'au moins 150°C.

10. Collecteur selon l'une quelconque des revendications 7 à 9, caractérisé en ce que le réflecteur est la surface argentée formée en argentant la face de ladite matière à haute transparence située à l'opposé de la lentille.

11. Collecteur selon l'une quelconque des revendications 7 à 10, caractérisé en ce que la forme de la surface du réflecteur est définie en partie au moins par le lieu géométrique des intersections de tangentes tracées à partir du récepteur avec des rayons allant de la lentille à un point situé à une distance focale choisie de celle-ci et sous l'angle de réception modifié, la bissectrice de l'angle formé par une tangente et un rayon à chaque intersection étant normale à la surface du réflecteur.

12. Pluralité de collecteurs selon l'une quelconque des revendications précédentes, disposés côte à côte avec quasi-parallélisme des axes longitudinaux des lentilles, des récepteurs et des réflecteurs.

FIG. 1

FIG. 2

0 020 153